# EUROPEAN PATENT SPECIFICATION

(11) **EP 1 837 271 B1**
(45) Date of publication and mention of the grant of the patent: **18.05.2011**
(21) Application number: 06022141.3
(22) Date of filing: 23.10.2006
(51) Int. Cl.: B62J 1/08, B62J 1/00

(54) **Bicycle saddle and means for mounting the saddle on a bicycle seat post**
Fahrradsattel und Vorrichtung zur Befestigung des Sattels auf einem Fahrradsattelträger
Selle de bicyclette et des moyens de fixation de selle sur une tige de selle de bicyclette

(30) Priority: 20.03.2006 CN 200620008348 U; 24.08.2006 CN 200610111915
(43) Date of publication of application: 26.09.2007
(73) Proprietor: Chen, Jia-Pin, Taichung County 437 (TW); Chao, Kuo-Chin, Taichung County 437 (TW)
(72) Inventor: Chen, Jia-Pin, Taichung County 437 (TW); Chao, Kuo-Chin, Taichung County 437 (TW)
(74) Representative: Becker Kurig Straus

(56) References cited:
- EP-A- 1 394 025
- WO-A-02/12055
- WO-A-94/25331
- CN-Y- 2 297 364
- CN-Y- 2 616 454
- US-A- 1 216 273
- US-A- 5 692 801

## Description

### BACKGROUND OF THE INVENTION

### 1. Field of the Invention

The present invention relates generally to a bicycle saddle with a light-weight yet hardy construction, and means for easily mounting the bicycle saddle on a bicycle seat post.

### 2. Description of the Related Art

In general, all prior art bicycle saddles utilize a pair of parallel support rails running longitudinally of the saddle and spaced from its underside to attach to the bicycle seat post. The rails are typically made of metal such as aluminum, steel, titanium, or the like and engaged and held in place by appropriate mounting hardware associated with the bicycle seat post.

A disadvantage of the prior art saddles is that the rails tend to bend in use, so that the seat eventually goes out of alignment. Also, the attachment brackets for the rails interfere with the aerodynamic flow of air under the saddle. In addition, for utilizing the rails and the attachment brackets, the weight of the prior art bicycle saddles can not be effectively reduced.

U.S. Pat. No. 6,561,578 disclosed a new mounting system for bicycle saddles to avoid the drawbacks described above. The mounting system has a T-beam rail that protrudes perpendicularly from the underside of a saddle and a guide formed by a pair of channel plates that are secured on a bicycle seat post and clamp the rail therebetween so that the saddle can be mounted on the seat post. Such a mounting system can eliminate the disadvantages of the prior art saddles for no support rails of prior art saddles. However, it still produces some disadvantages. One of the disadvantages is that the connecting area between the saddle and the T-beam rail cracked easily due to stresses formed therein. Another disadvantage is that the mounting system can not cooperate with prior art seat posts.

U.S. Pat. No. 1,216,273 is considered as the closest prior art and discloses all features of the preamble of independent claim 1.

### SUMMARY OF THE INVENTION

It is the primary objective of the present invention to provide a light-weight yet hardy bicycle saddle with no prior art support rails and means for easily mounting the saddle on bicycle seat posts.

It is a further objective of the present invention to provide a bicycle saddle with ventilation function for dissipating heat generated in the rider's perineal areas.

In carrying out the foregoing objectives, a bicycle saddle in accordance with the present invention comprises a saddle body including a wide rear portion, a narrow front portion, a middle portion positioned between the wide rear portion and the narrow front portion. The saddle body further includes a hollowed mounting portion extending downwardly from the underneath side of the saddle body.

The hollowed mounting portion of the saddle body has a depression being U-shaped in transverse cross section and extending along the center axis of said saddle body. The depression has two side walls separated by a predetermined distance and a bottom wall at the foot ends of the side walls.

The present invention further comprises means for cooperating with the mounting portion of the saddle body and appropriate prior art mounting hardware associated with a bicycle seat post to easily mount the saddle body on a bicycle seat post.

The means mentioned above includes upper and under devices to cooperate with the mounting portion of the saddle body in such a way that a part of the mounting of the saddle body is sandwiched by the upper and under devices to easily mount the saddle body on a seat post.

The invention is characterized in that the rear side of each of said side walls of the U-shaped depression has a cove to absorb the vibration as riding.

The claimed invention can be better understood in view of the embodiments described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention per se. This also holds for the subsequent "Brief description of the drawings" as well as the "Detailed description of the invention".

### BRIEF DESCRIPTION OF THE DRAWINGS

The present invention may be more clearly understood with reference to the following detailed description, in conjunction with the appended drawings of which:
FIG. 1 is a top view of a first preferred embodiment of a saddle body according to the present invention;
FIG. 2 is a side view of the embodiment shown in FIG. 1;
FIG. 3 is a cross-sectional view taken along the line 3-3 of FIG. 1;
FIG. 4 is a cross-sectional view taken along the line 4-4 of FIG. 2;
FIG. 5 is a cross-sectional view taken along the line 5-5 of FIG. 2;
FIG. 6 is a cross-sectional view taken along the line 6-6 of FIG. 2;
FIG. 7 is a cross-sectional view taken along the line 7-7 of FIG. 2;
FIG. 8 is a side view a first preferred embodiment of a mounting means according to the present invention clearly showing that the saddle body shown in FIG. 1 is mounted on a seat post by the mounting means;
FIG. 9 is a top view of a first preferred embodiment of a mounting means according to the present invention clearly showing that the saddle body shown in FIG. 1 is mounted on a seat post by the mounting means;
FIG. 10 is a cross-sectional view taken along the line 10-10 of FIG. 8;
FIG. 11 is a cross-sectional view taken along the line 11-11 of FIG. 9;
FIG. 12 is a top view of a second preferred embodiment of a mounting means according to the present invention more clearly showing that the saddle body shown in FIG. 1 is mounted on a seat post by the mounting means;
FIG. 13 is a cross-sectional view taken along the line 13-13 of FIG. 12;
FIG. 14 is a top view of a third preferred embodiment of a mounting means according to the present invention more clearly showing that the saddle body shown in FIG. 1 is mounted on a seat post by the mounting means;
FIG. 15 is a cross-sectional view taken along the line 15-15 of FIG. 14;
FIG. 16 is a top view of a second preferred embodiment of a saddle body according to the present invention;
FIG. 17 is a side view of the embodiment shown in FIG. 16;
FIG. 18 is a cross-sectional view taken along the line 18-18 of FIG. 16;
FIG. 19 is a side view of a third preferred embodiment of a saddle body according to the present invention;
FIG. 20 is a top view of a fourth preferred embodiment of a saddle body according to the present invention;
FIG. 21 is a top view of a fifth not claimed embodiment of a saddle body according to the present invention;
FIG. 22 is an exploded view of the embodiment shown in FIG. 21;
FIG. 23 is a cross-sectional view taken along the line 23-23 of FIG. 21;
FIG. 24 is a cross-sectional view taken along the line 24-24 ofFIG.21;
FIG. 25 is a top view of a sixth preferred embodiment of a saddle body according to the present invention mounted on a seat post by a fourth preferred embodiment of a mounting means according to the present invention; and
FIG. 26 is a cross-sectional view taken along the line 26-26 of FIG.25.

### DETAILED DESCRIPTION OF THE INVENTION

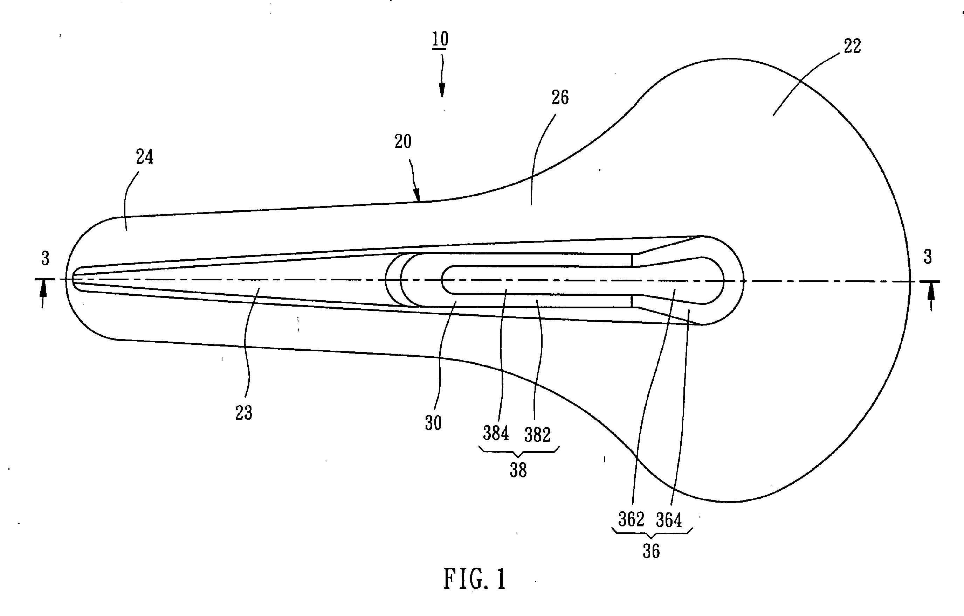

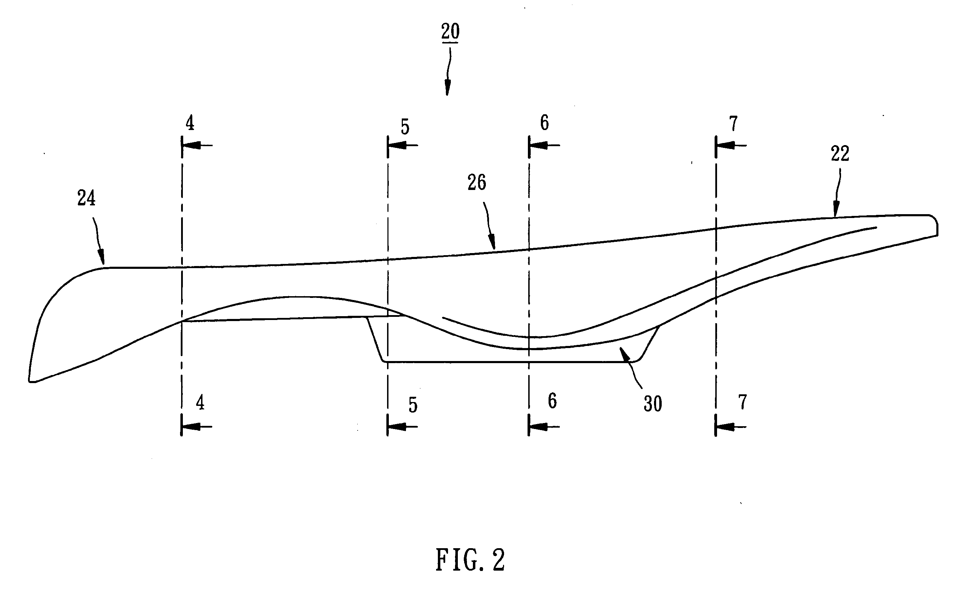

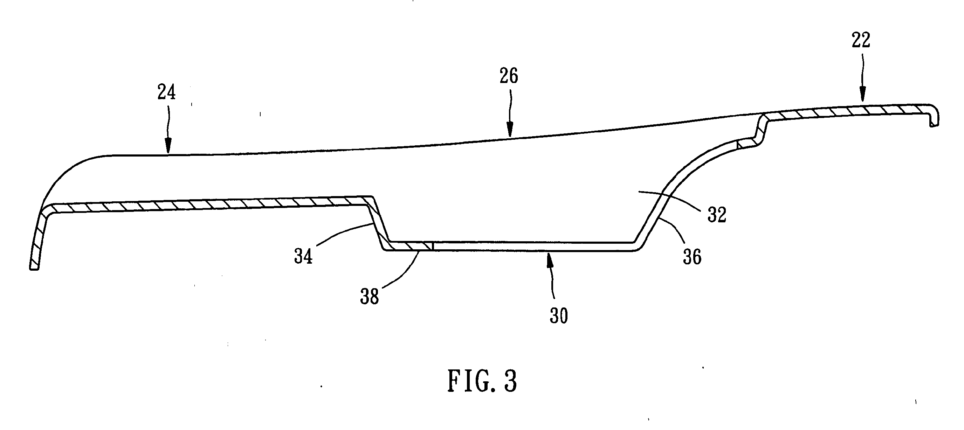

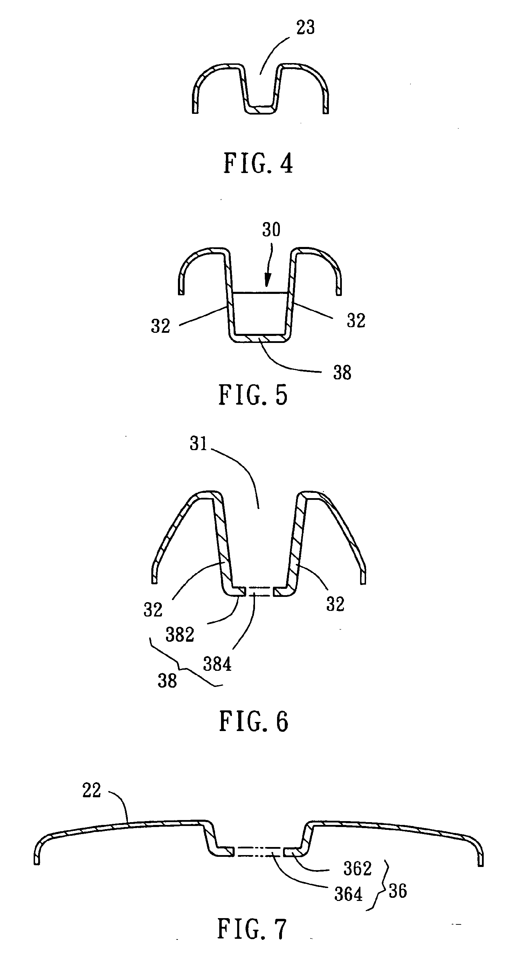

Referring firstly to FIGS. 1 to 7, there is illustrated a first embodiment of a bicycle saddle of the present invention, generally designated 10. Bicycle saddle 10 includes a saddle body 20 which is made of particularly rigidity and light materials such as, for example, strengthened plastics, fiber-reinforced plastics or alloys. Saddle body 20 has a wide rear portion 22, a narrow front portion 24, a middle portion 26 positioned between wide rear portion 22 and a narrow front portion 24, and a hollowed mounting portion 30 extending downwardly from the underneath side of saddle body 20. The upper side of saddle body 20 provides a ventilation channel 23 extending along the center axis of saddle body 20.

Mounting portion 30, in this embodiment, is a U-shaped depression in transverse cross section. Describing detailedly, mounting portion 30 has an rectangle upper opening 31 located on the upper side of saddle body 20, two side walls 32 extending respectively and downwardly from each long side of upper opening 31, a front wall 34 located near narrow front portion 24, a rear wall 36 located near wide rear portion 22 and a bottom wall 38.

Rear wall 36 extends downwardly and forwardly from a short side of upper opening 31 to connect with bottom wall 38 and includes a rear opening 364 and an upper reinforced edge 362.

Bottom wall 38 has an under edge 382 and a center cut 384 with an open side. Rear opening 364 of rear wall 36 extends downwardly to connect with the open side of center cut 384 of bottom wall 38. Rear opening 364 of rear wall 36 is used not only to cooperate with ventilation channel 23 to perform ventilation function but also to form a resilient buffer such as, for example, each of side walls 32 can have a rear side with a cove so that each of side walls 32 serves as a resilient buffer to absorb the vibrations as riding.

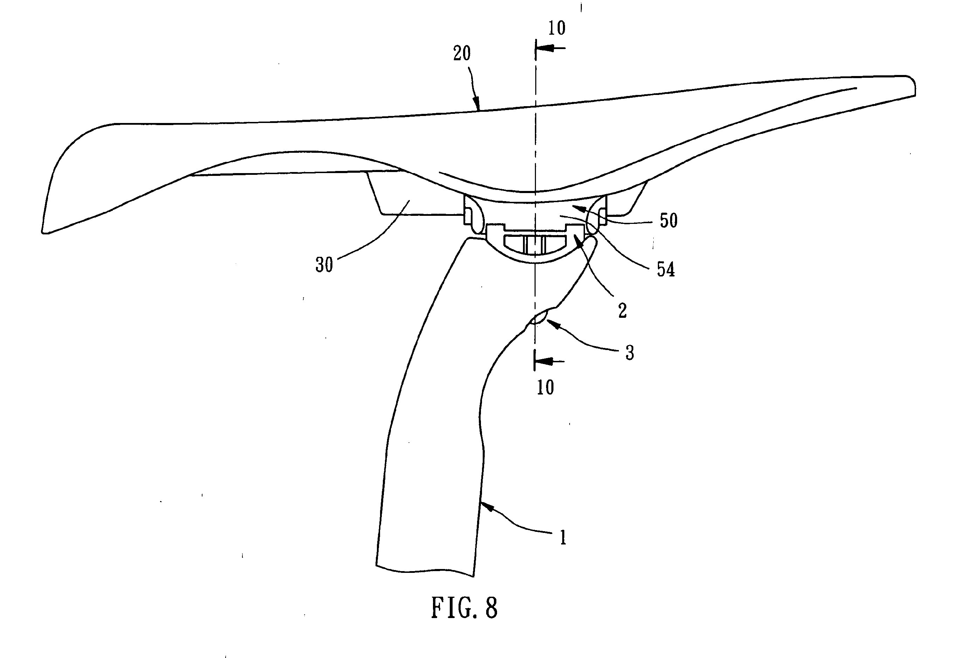

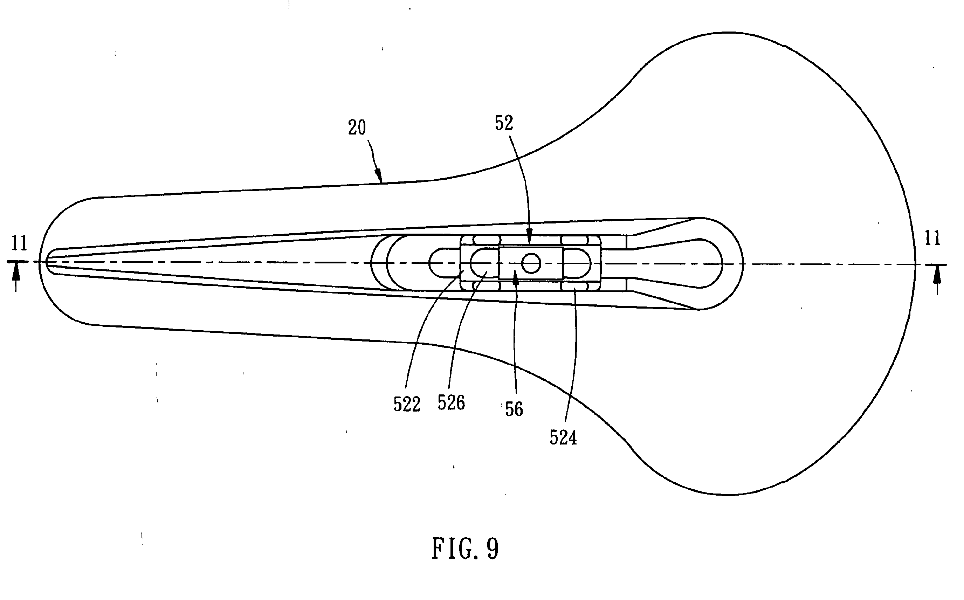

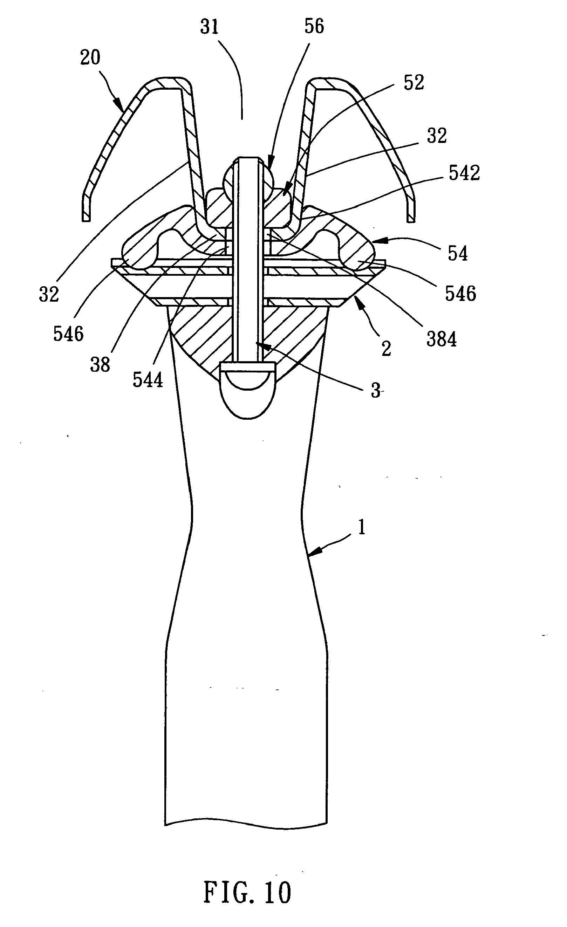

Referring secondly to FIGS. 8 to 13, mounting means embodied according to the present invention to mount saddle body 20 on a bicycle seat post is designated 50. Mounting means 50 includes an upper device 52, an under device 54 and at least a fixing device 56.

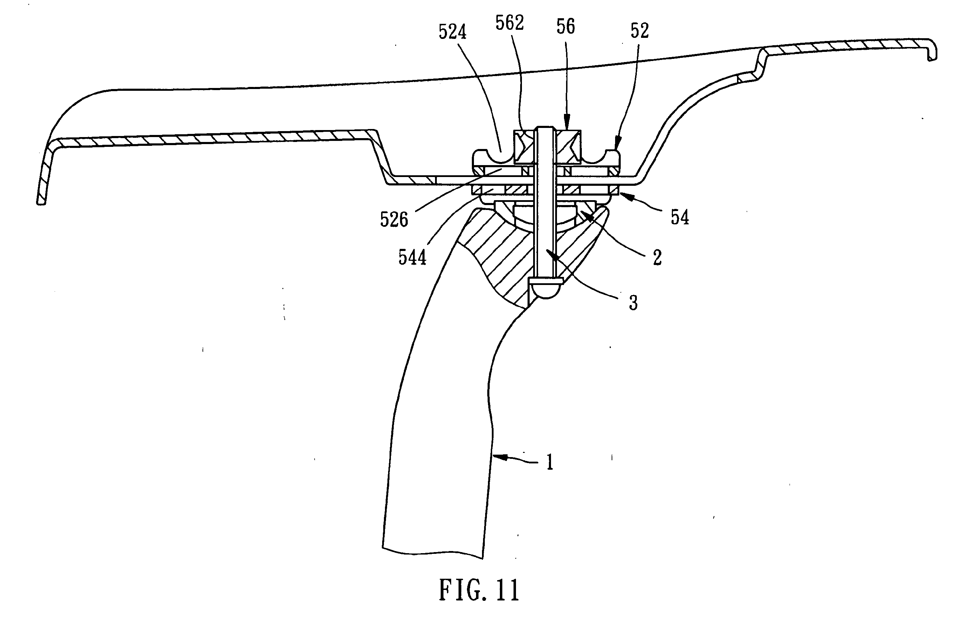

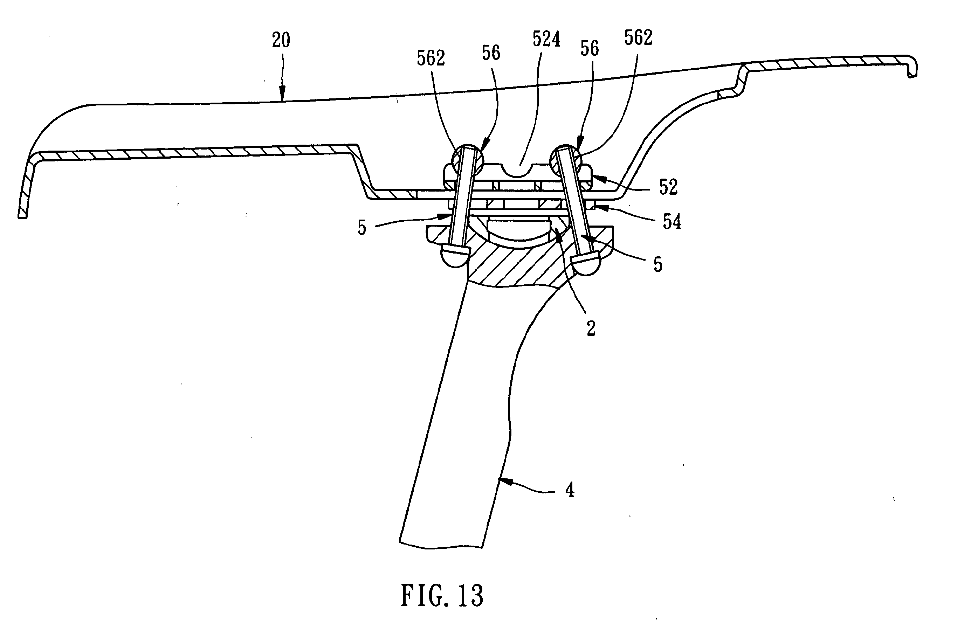

Upper device 52 has a lump-shaped body with a lengthwise slot 522, three crosswise slots 524 and three holes 526. Fixing device 56 can be designed to have a long cylinder-shaped body with a threaded hole 562 to be received in lengthwise slot 522 of upper device 52 (as shown in FIG.11), or a short cylinder-shaped body with a thread hole 562 to be received in one of crosswise slots 524 ( as shown in FIG. 13).

Under device 54 has a plate-shaped body with a slot-like passage 542 provided on the upper surface thereof and three holes 544 respectively corresponding to each hole 526 of upper device 52, and two bended-down side 546.

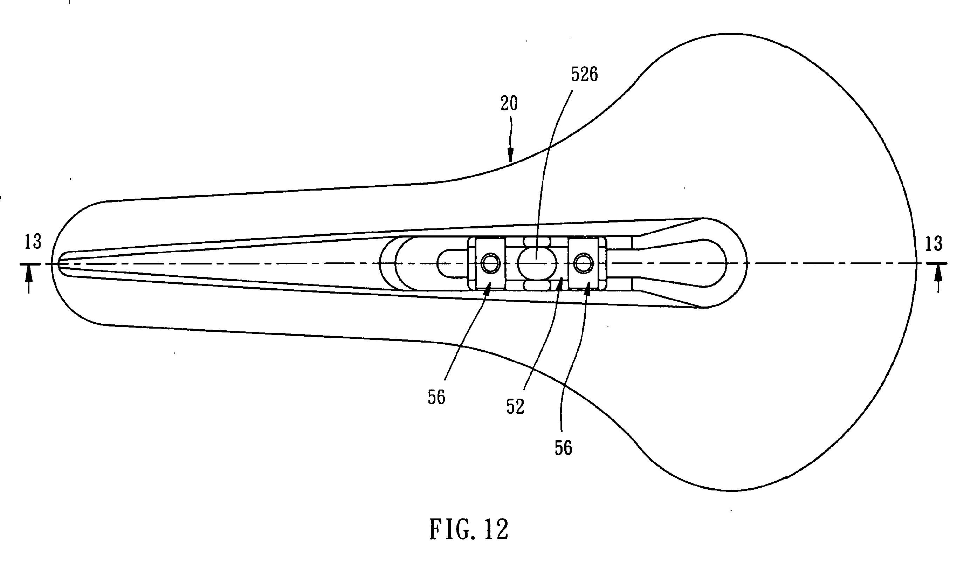

In mounting, upper device 52 is placed against the upper surface of bottom wall 38 of mounting portion 30 from upper opening 31 thereof. Under device 54 is placed against the lower surface of bottom wall 38 such that the bottom wall 38 is sandwiched by upper device 52 and under device 54, and in the same time, the end part of mounting portion 30 is received in passage 542 of under device 54 with each side 546 thereof fitted to a prior art hardware 2 secured on the top end of bicycle seat post 1. And then, screw 3 is inserted in sequence into a hole provided on seat post 1, hole 544 of under device 54, cut 384 of bottom wall 38 of mounting portion 30, hole 526 of upper device 52, and screwed onto threaded hole 562 of fixing device 56 so that saddle body 20 is mounted on bicycle seat post 1. As shown in FIGS.12 and 13, in another embodiment, two screws 5 are used to screw all of members mentioned above together.

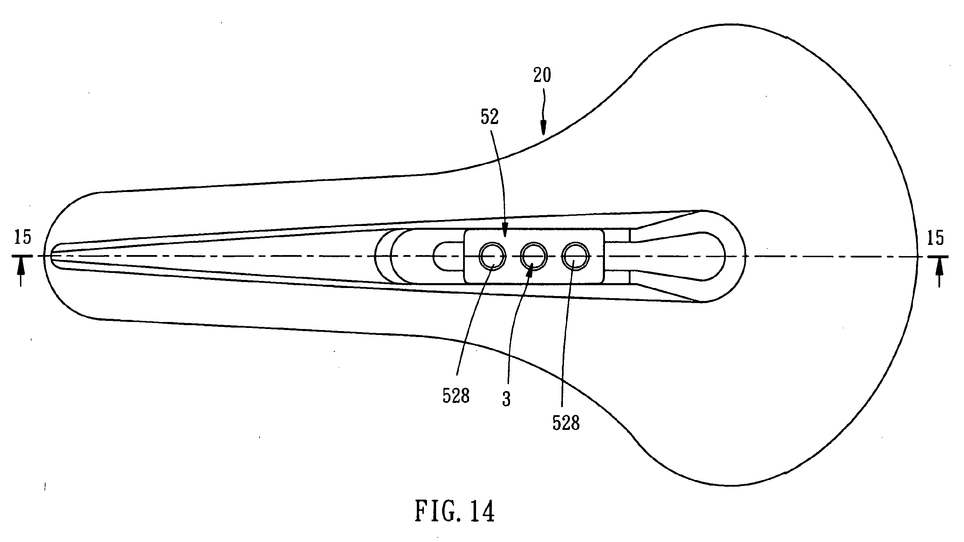

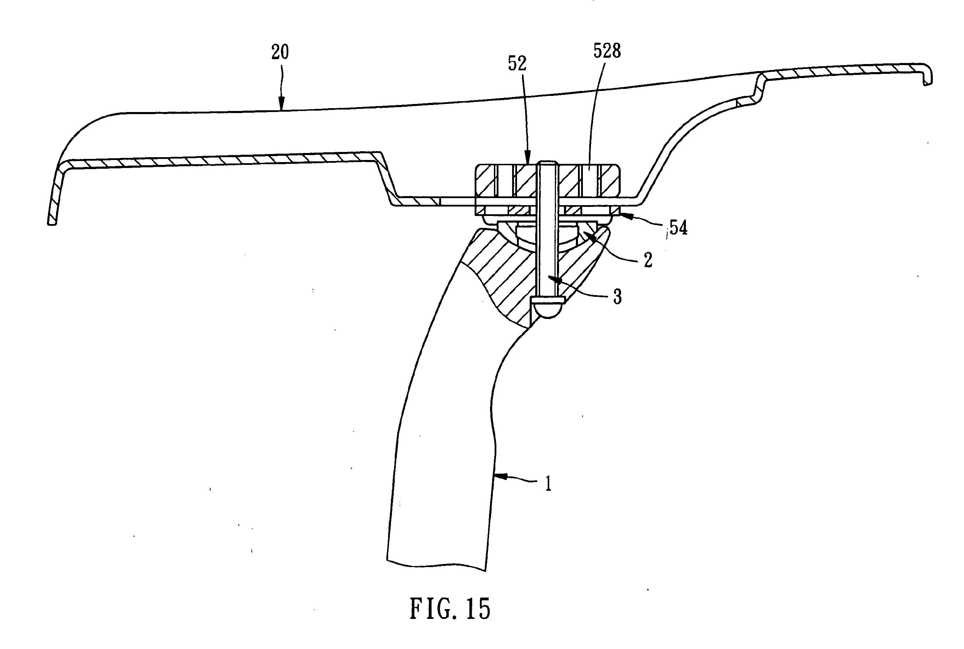

Referring further to FIGS.14 and 15, in another embodiment, upper device 52 of mounting means 50 is designed to have three threaded holes 528 so that screw 3 can directly screwed onto one of threaded holes 528 of upper device 52 without using fixing device 56.

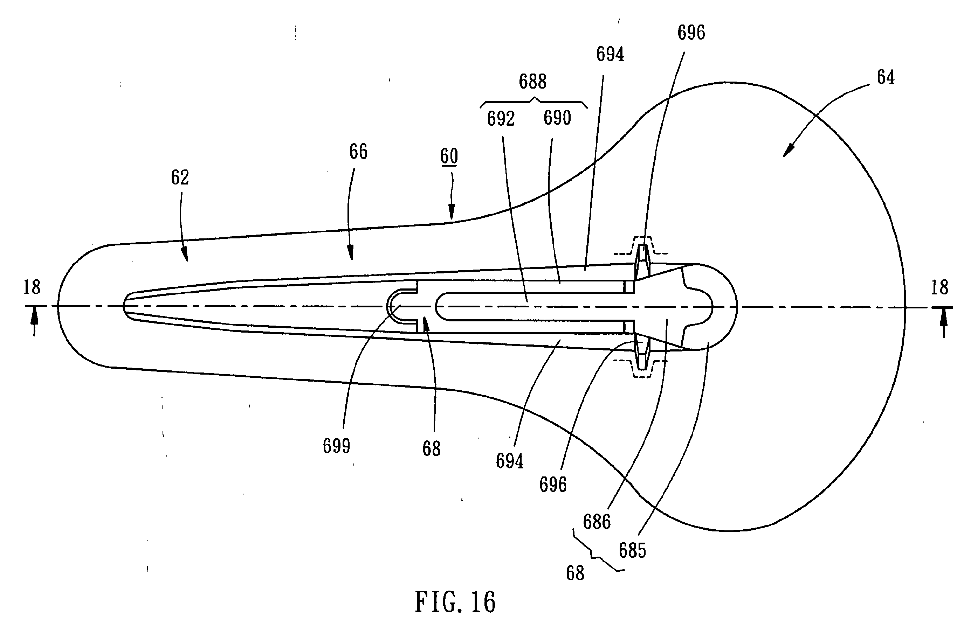

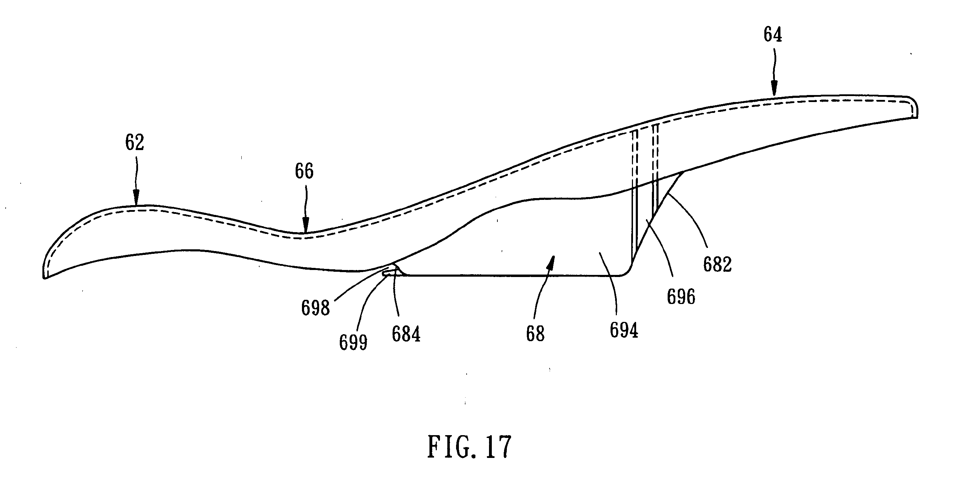

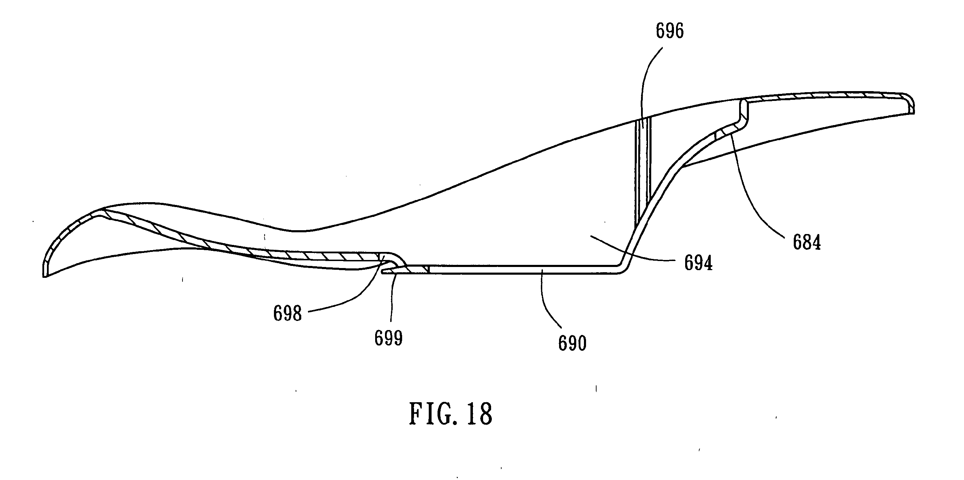

Referring now to FIGS. 16 to 18, a second embodiment of a saddle body of the present invention is designated 60. Saddle body 60 includes a narrow front portion 62 which fits between bicycle rider's crotch, a wide rear portion 64 for supporting bicycle rider's buttocks, a concave middle portion 66 located therebetween and a hollowed mounting portion 68 extending downwardly from the underneath side of saddle body 60.

Wide rear portion 64 rises gradually from one end thereof which is connected with concave portion 66 to a free end of wide rear portion 64 so that an opening space with a sufficient depth above concave portion 66 is formed to arrange rider's genitals.

Mounting portion 68 is U-shaped in transverse cross section which includes a rear wall 682, a front wall 684 being shorter than rear wall 682, a bottom wall 688 and two side walls 694. Rear wall 682 has an upper edge 685 and a first opening 686. Bottom wall 688 has a bottom edge 690 and a long cut 692. Each of side walls 694 has a reinforced rib 696. Front wall 684 is designed to have a second opening 698 so that a tip 699 can be formed on the front end of bottom wall 688 to hang up a protecting cover.

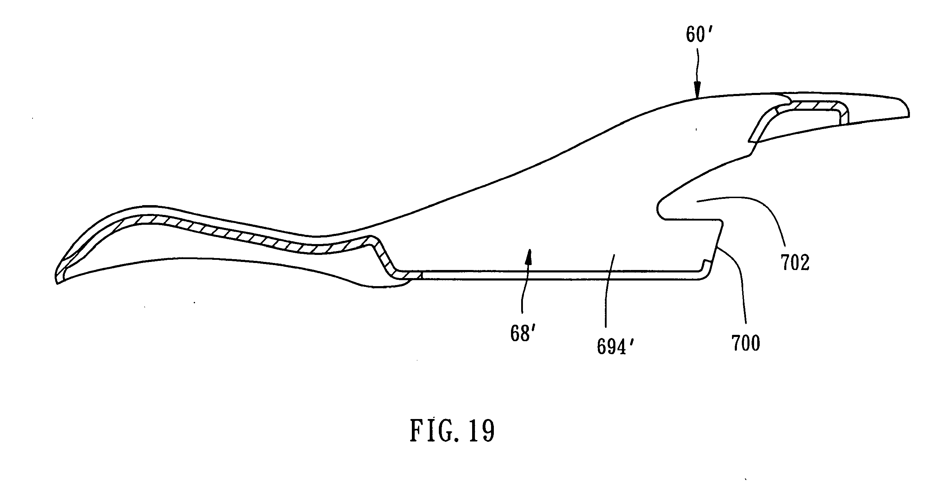

In a third preferred embodiment of a saddle body 60' according to the present invention, each of side walls 694' of the mounting portion 68'of saddle body 60' has a rear side 700 with a cove 702 so that each of side walls 694' can serve as a resilient buffer to absorb the vibrations as riding (as shown in FIG. 19).

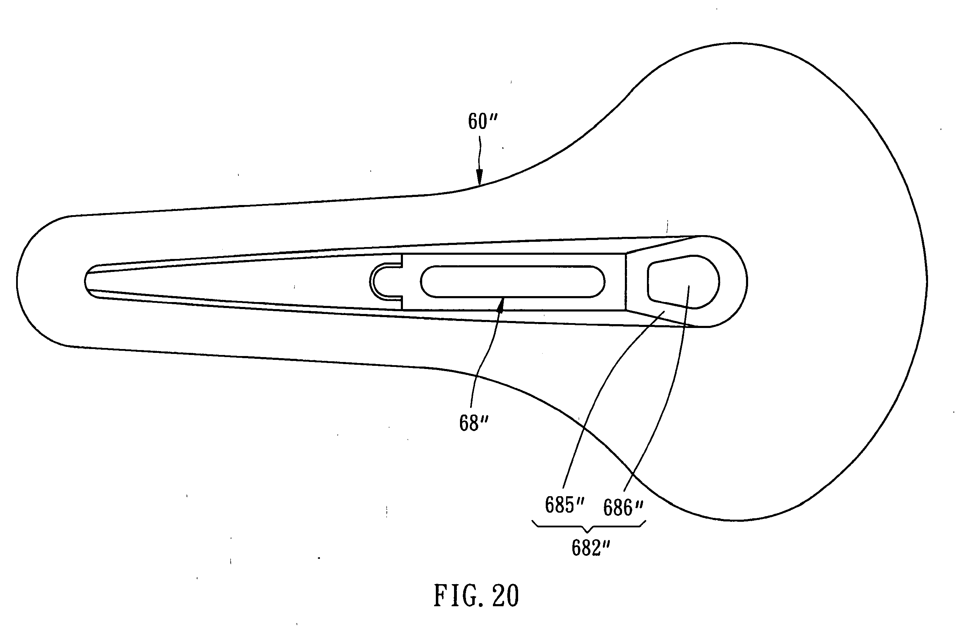

In a fourth preferred embodiment of a saddle body 60" according to the present invention, rear wall 682" of mounting portion 68" has an opening 686" located on the center portion thereof rear wall 682 "and an edge 685" surrounding opening 686"(as shown in FIG. 20).

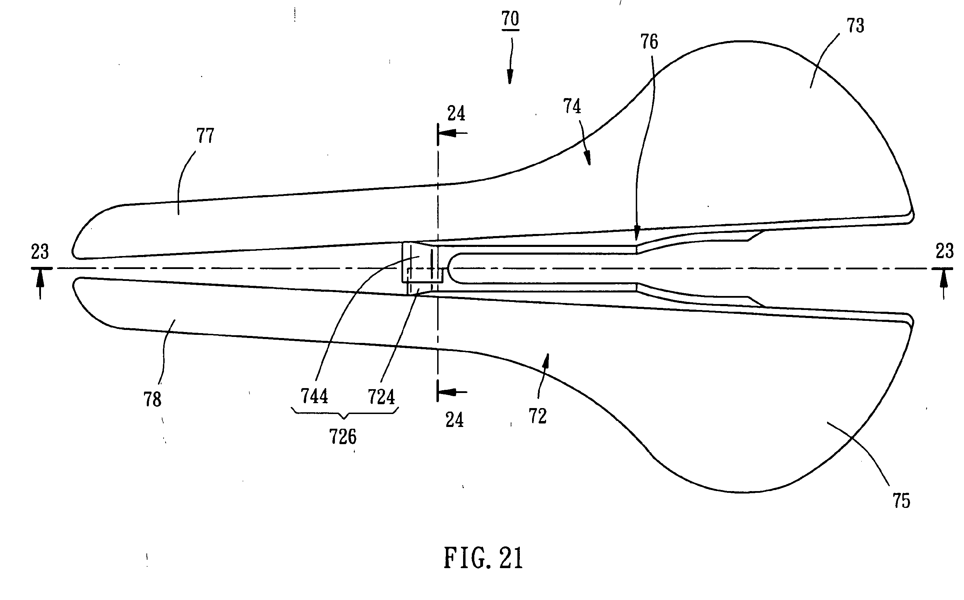

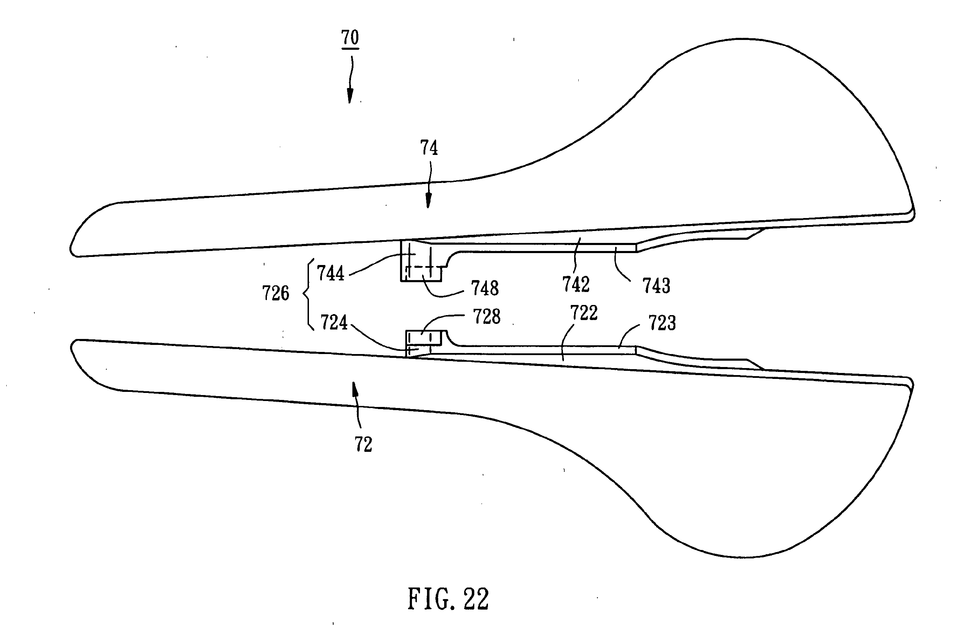

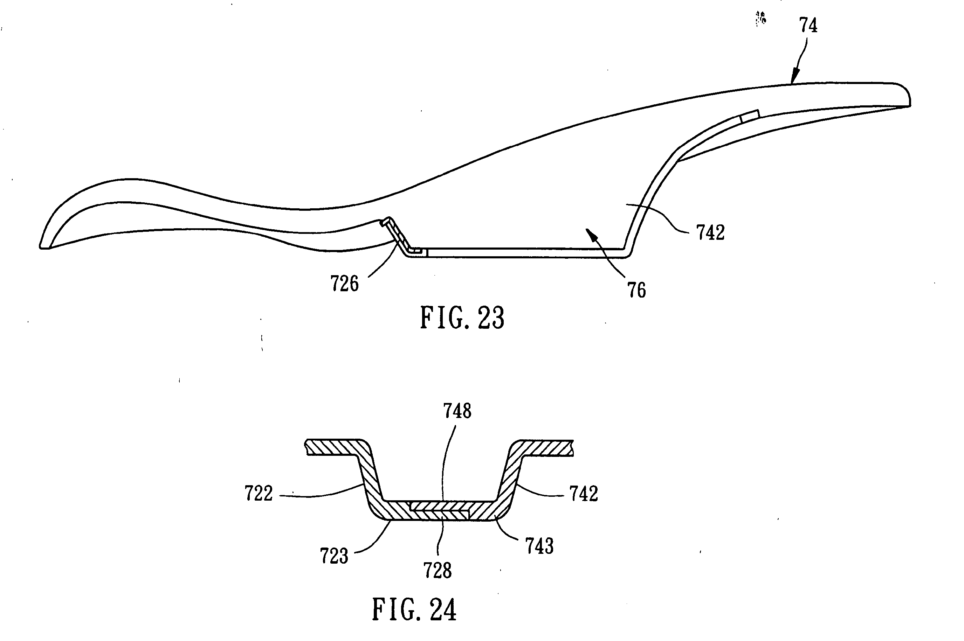

Referring further to FIGS.21 to 24, a fifth not claimed embodiment of a saddle body of the present invention is designated 70. Saddle body 70 includes a pair of elongate frames 72, 74. Each of frames 72, 74 has respectively a wide rear portion 73, 75, a narrow front portion 77, 78, a side wall 722, 742, an under edge 723, 743, and a front wall 724, 744. When connecting together, frames 72, 74 forms saddle body 70 with a U-shaped mounting portion 76 having a front wall 726 to cooperate with mounting means provided by the present invention to mount saddle body 70 on a bicycle seat post. In this embodiment, each of front walls 724, 744 has a connecting edge 728, 748 formed complementally so that frames 72, 74 can be easily connected together.

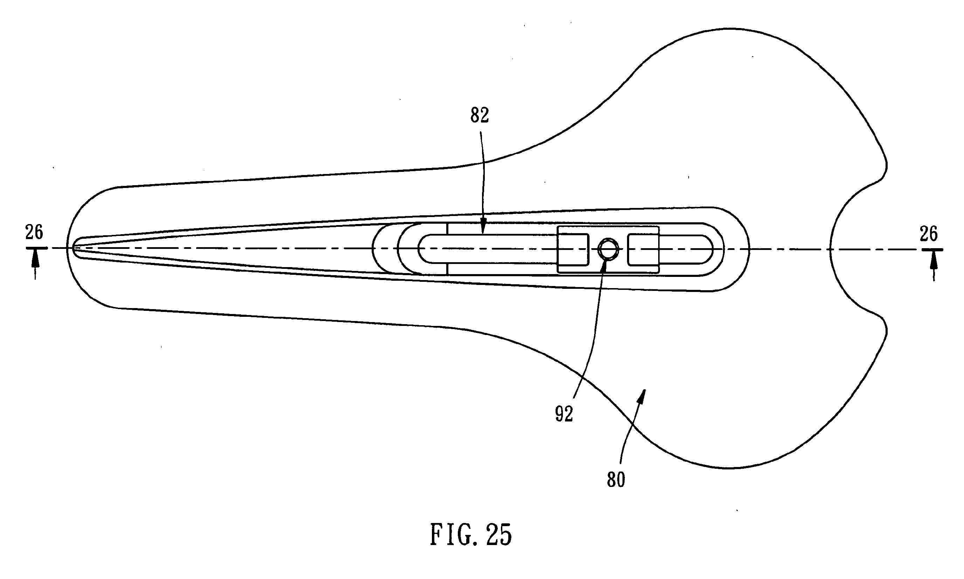

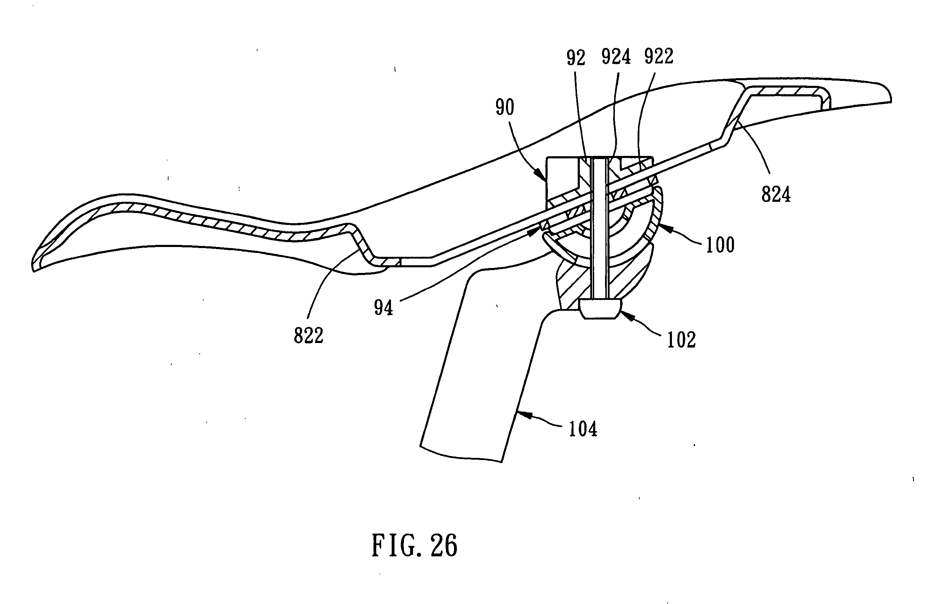

Referring lastly to FIGS.25 and 26, a sixth embodiment of a saddle body of the present invention is designated 80. Saddle body 80 includes a mounting portion 82 having a front wall 822 and a rear wall 824 with a height being equal to front wall 822. A mounting means 90 according to the present invention has an upper device 92 with an inclined bottom side 922 and a threaded hole 924, an under device 94 being similar to under device 54. In mounting, upper device 92 and under device 94 can cooperate with a prior art hardware 100 secured on a bicycle seat post 104 and a screw 102 to mount saddle body 80 on seat post 104 in an inclined way.

As mentioned above, the bicycle saddle provided by the present invention is designed to have a U-shaped mounting portion to substitute for prior art support rails so that the weight of saddles can be significantly decreased, and the process to mount the saddle on a seat post is also simplified. The mechanical strength of the U-shaped mounting portion is better than that of T-beam rail disclosed in U.S. Patent No. 6,561,578. In addition, for having the mounting means of the present invention, the bicycle saddle of the present invention can be easily mounted on any of prior art bicycle seat posts. Further, for having openings provided thereon, the mounting portion of the saddle body disclosed in the present invention can provide good ventilation.

The invention being thus described, it will be obvious that the same may be varied in many ways.

## Claims

1. A bicycle saddle assembly comprising:
a saddle body (20) including a wide rear portion (22), a narrow front portion (24), a middle portion (26) positioned between said wide rear portion (22) and said narrow front portion (24);
said saddle body (20) further including a hollowed mounting portion (20) extending downwardly from the underneath side of said saddle body (20), wherein said hollowed mounting portion (30) extends along the center axis of said saddle body (20), said mounting portion (30) including an U-shaped depression in transverse cross section and having two side walls (32) separated by a predetermined distance, wherein each of said side walls (32) has a front side near said narrow portion (24) of said saddle body (20) and a rear side near said wide rear portion (22) of said saddle body (20), the length of said rear side being longer than that of said front side, a front wall (34) near said narrow portion (24) of said saddle body (20), and a rear wall (36) near said wide rear portion (22) of said saddle body (20) and a bottom wall (38), said rear wall (36) having a first opening (364), said bottom wall (38) having a center cut (384); and
means (50) for cooperating with said mounting portion (30) of said saddle body (20) and appropriate prior art mounting hardware (2) to mount said saddle body (20) on a bicycle seat post (1), said means (50) including upper (52) and under (54) devices to cooperate with said mounting portion (30) of said saddle body (20) in such a way that said bottom wall (38) of said mounting portion (30) is sandwiched by said upper (52) and under (54) devices to mount said saddle body (20) on a seat post (1), **characterized in that** the rear side of each of said side walls (32) has a cove to absorb the vibration as riding.

2. The bicycle saddle assembly as claimed in claim 1, wherein each of said side walls has at least a reinforced rib.

3. The bicycle saddle assembly as claimed in claim 1, wherein said front wall has a second opening.

4. The bicycle saddle assembly as claimed in claim 1, wherein said upper device has a lump-shaped body with a threaded hole, said under device has a plate-shaped body with a slot-like passage provided on the upper surface of said plate-shaped body and a hole piercing through said plate-shaped body.

5. The bicycle saddle assembly as claimed in claim 1, wherein said upper device has a lump-shaped body with at least a slot provided on the upper surface of said lump-shaped body and at least a hole piercing through said lump-shaped body, said under device has a plate-shaped body with a passage provided on the upper surface of said plate-shaped body and a hole piercing through said plate-shaped body, the mounting means further includes a fixing device with a threaded hole to be received in said slot of said upper device.

6. The bicycle saddle assembly as claimed in claim 5, wherein said lump-shaped body of said upper device has a lengthwise slot provided on the upper surface thereof, and at least a crosswise slot provided on the upper surface thereof, said fixing device is cylinder-shaped to be received in one of said slots of said upper device.

## Patentansprüche

1. Fahrradsattelanordnung, umfassend:
einen Sattelkörper (20) umfassend einen weiten hinteren Bereich (22), einen engen vorderen Bereich (24) und einen zwischen dem weiten hinteren Bereich (22) und dem engen vorderen Bereich (24) positionierten mittleren Bereich (26);
worin der Sattelkörper (20) weiterhin umfasst, einen hohlen Montagebereich (30), der sich von der Unterseite des Sattelkörpers (20) nach unten erstreckt, worin sich der hohle Montagebereich (30) entlang der Zentralachse des Sattelkörpers (20) erstreckt, worin der Montagebereich (30) in transversalem Querschnitt eine U-förmige Vertiefung umfasst, die zwei Seitenwände (23) aufweist, die durch einen bestimmten Abstand getrennt sind, worin jede der Seitenwände (32) eine vordere Seite nahe dem engen Bereich (24) des Sattelkörpers (20) aufweist und eine hintere Seite nahe dem weiten hinteren Bereich (22) des Sattelkörpers (20), worin die Länge der hinteren Seite länger ist als die der vorderen Seite, eine vordere Wand (34) nahe dem engen Bereich (24) des Sattelkörpers (20) und eine hintere Wand (36) nahe dem weiten hinteren Bereich (22) des Sattelkörpers (20) und eine untere Wand (38), worin die hintere Wand (36) eine erste Öffnung (364) und die untere Wand (38) einen Schnitt durch die Mitte aufweist; und
Mittel (50), um mit dem Monatgebereich (30) des Sattelkörpers (20) und geeigneten Montageteilen (2) des Standes der Technik zusammenzuwirken, um den Sattelkörper (20) an einer Sattelstütze eines Fahrrads (1) anzubringen, worin die Mittel (50) obere (52) und untere (54) Vorrichtungen umfassen, um mit dem Monatgebereich (30) des Sattelkörpers (20) in derartiger Weise zusammenzuwirken, dass die untere Wand (38) des Montagebereichs (30) zwischen die oberen (52) und unteren (54) Vorrichtungen eingeschoben ist, um den Sattelkörper (20) an einer Sattelstütze (1) anzubringen,
**dadurch gekennzeichnet, dass** die hintere Seite jeder Seitenwand (32) eine Wölbung aufweist, um die Schwingung beim Fahren zu absorbieren.

2. Fahrradsattelanordnung nach Anspruch 1, worin jede der Seitenwände mindestens eine verstärkte Rippe aufweist.

3. Fahrradsattelanordnung nach Anspruch 1, worin die vordere Wand eine zweite Öffnung aufweist.

4. Fahrradsattelanordnung nach Anspruch 1, worin die obere Vorrichtung einen beulenartig geformten Körper mit einem Gewindeloch aufweist, worin die untere Vorrichtung einen plattenartig geformten Körper mit einem schlitzartigen Durchgang, der an der oberen Oberfläche des plattenartig geformten Körpers bereitgestellt ist, aufweist, und ein Loch, das durch den plattenartig geformten Körper sticht.

5. Fahrradsattelanordnung nach Anspruch 1, worin die obere Vorrichtung einen beulenartig geformten Körper mit mindestens einem Schlitz aufweist, der an der oberen Oberfläche des beulenartig geformten Körpers bereitgestellt ist und mindestens ein Loch, das durch den beulenartig geformten Körper sticht, worin die untere Vorrichtung einen plattenartig geformten Körper mit einem Durchgang aufweist, der an der oberen Oberfläche des plattenförmig geformten Körpers bereitgestellt ist und ein Loch, das durch den plattenartig geformten Körper sticht, worin das Montagemittel weiterhin eine Befestigungsvorrichtung mit einem Gewindeloch umfasst, um in dem Schlitz der oberen Vorrichtung aufgenommen zu werden.

6. Fahrradsattelanordnung nach Anspruch 5, worin der beulenartig geformte Körper der oberen Vorrichtung einen länglichen Schlitz aufweist, der an der oberen Oberfläche davon bereitgestellt wird, und mindestens einen kreuzförmigen Schlitz, der an der oberen Oberfläche davon bereitgestellt ist, worin die Befestigungsvorrichtung zylinderförmig ist, um in einem der Schlitze der oberen Vorrichtung aufgenommen zu werden.

## Revendications

1. Un ensemble de selle de bicyclette comprenant :
un corps de selle (20) comprenant une partie arrière large (22), une partie avant étroite (24), une partie médiane (26) positionnée entre ladite partie arrière large (22) et ladite partie avant étroite (24) ;
ledit corps de selle (20) comprenant en outre une partie portante creuse (30) s'étendant vers le bas à partir de la surface inférieure dudit corps de selle (20), dans laquelle ladite partie portante creuse (30) s'étend le long de l'axe central dudit corps de selle (20), ladite partie portante comprenant une dépression de section transversale en forme de U, dans laquelle chacune desdites parois latérales (32) comporte une face avant proche de ladite partie étroite (24) dudit corps de selle (20) et une face arrière proche de ladite partie arrière large (22) dudit corps de selle (20), la longueur de ladite face arrière étant plus longue que celle de ladite face avant, et comportant deux parois latérales (32) séparées par une distance prédéterminée, une paroi avant (34) proche e ladite partie étroite (24) dudit corps de selle (20) et une paroi arrière (26) proche de la partie arrière large (22) dudit corps de selle (20) et une paroi de fond (38), ladite paroi arrière (36) comportant une première ouverture (364), ladite paroi de fond (38) comportant une ouverture centrale ; et
des moyens (50) pour coopérer avec ladite partie portante (30) dudit corps de selle (20) et un appareillage approprié de l'état de la technique pour monter ledit corps de selle (20) sur une tige de siège de bicyclette (1), lesdits moyens (50) comprenant des dispositifs supérieur (52) et inférieur (54) pour coopérer avec ladite partie portante (30) dudit corps de selle (20) de façon telle que la paroi de fond (38) de ladite partie portante (30) est prise en sandwich par lesdits dispositifs supérieur (52) et inférieur (54) pour monter ledit corps de selle (20) sur une tige de siège (1), **caractérisé en ce que** la face arrière de chaque paroi latérale (32) comporte une rainure pour absorber les vibrations lors du chevauchement.

2. L'ensemble de selle de bicyclette tel que revendiqué dans la revendication 1 dans lequel chacune desdites parois latérales comporte au moins une nervure renforcée.

3. L'ensemble de selle de bicyclette tel que revendiqué dans la revendication 1 dans lequel ladite paroi avant comporte une seconde ouverture.

4. L'ensemble de selle de bicyclette tel que revendiqué dans la revendication 1 dans lequel ledit dispositif supérieur comporte un corps morcelé avec un trou taraudé, ledit dispositif inférieur comporte un corps en forme de plateau avec un passage en forme de gorge disposé sur la surface supérieure dudit corps en forme de plateau et un trou perforant ledit corps en forme de plateau.

5. L'ensemble de selle de bicyclette tel que revendiqué dans la revendication 1 dans lequel ledit dispositif supérieur comporte un corps morcelé avec au moins une gorge disposée à la surface supérieure dudit corps morcelé et au moins un trou perforant ledit corps morcelé, ledit dispositif inférieur comporte un corps en forme de plateau avec un passage en forme de gorge disposé sur la surface supérieure dudit corps en forme de plateau et un trou perforant ledit corps en forme de plateau, les moyens de support comprenant en outre un dispositif de fixage avec un trou taraudé pour être réceptionné dans ladite gorge dudit dispositif supérieur.

6. L'ensemble de selle de bicyclette tel que revendiqué dans la revendication 5 dans lequel ledit corps morcelé dudit dispositif supérieur comporte une gorge longitudinale sur la surface supérieure de celui-ci et au moins une gorge transversale disposée sur la surface supérieure de celui-ci, ledit dispositif de fixation étant en forme de cylindre pour être réceptionné dans l'une des gorges dudit dispositif supérieur.
